# EUROPÄISCHE PATENTSCHRIFT

(11) **EP 3 203 153 B1**
(45) Veröffentlichungstag und Bekanntmachung des Hinweises auf die Patenterteilung: **19.05.2021**
(21) Anmeldenummer: 17152125.5
(22) Anmeldetag: 19.01.2017
(51) Int. Cl.: F24C 15/00, F21V 23/04, F24C 15/20, F25D 27/00, F21V 33/00, F21Y 115/10, H05B 45/00, H05B 47/11, H05B 47/18, F21W 131/307

(54) **KÜCHENGERÄT MIT EINER BELEUCHTUNGSEINHEIT UND VERFAHREN ZUR BETÄTIGUNG EINER BELEUCHTUNGSEINHEIT**
KITCHEN APPLIANCE COMPRISING A LIGHTING UNIT AND METHOD FOR ACTUATING A LIGHTING UNIT
APPAREIL MÉNAGER COMPRENANT UNE UNITÉ D'ÉCLAIRAGE ET PROCÉDÉ D'ACTIONNEMENT D'UNE UNITÉ D'ÉCLAIRAGE

(30) Priorität: 08.02.2016 DE 102016201825
(43) Veröffentlichungstag der Anmeldung: 09.08.2017
(73) Patentinhaber: BSH Hausgeräte GmbH, 81739 München (DE)
(72) Erfinder: Abele, Dominik, 76646 Bruchsal (DE); Hörter, Simon, 76229 Karlsruhe (DE)

(56) Entgegenhaltungen:
- EP-A1- 2 775 214
- EP-A2- 1 459 600
- EP-A2- 2 615 711
- WO-A1-2013/166445
- WO-A1-2015/155020
- DE-A1-102010 006 697
- DE-A1-102012 017 381
- DE-A1-102015 200 735
- JP-A- 2006 017 390
- US-A1- 2012 319 616

## Beschreibung

Die vorliegende Erfindung betrifft ein Küchengerät mit zumindest einer Beleuchtungseinheit und einem Verfahren zur Betätigung zumindest einer Beleuchtungseinheit.

Im Stand der Technik sind Beleuchtungsvorrichtungen bekannt. So sind beispielsweise in der EP 1 459 600 B1 Verfahren und Systeme zum Bereitstellen einer gesteuerten Beleuchtung beschrieben, einschließlich Verfahren und Systeme zum Bereitstellen einer sowohl weißen als auch nicht weißen farbigen Beleuchtung, einschließlich einer farbtemperaturgesteuerten Beleuchtung. Derartige Verfahren und Systeme umfassen optische Einrichtungen zum Modifizieren des Lichts von einer Beleuchtungseinheit, beispielsweise einer LED-basierten Beleuchtungseinheit, einschließlich variabler optischer Einrichtungen und fester optischer Einrichtungen. Es werden auch Verfahren und Systeme zur Verwendung von Mehrfarben-Beleuchtungseinheiten in einer Vielzahl von kommerziellen Anwendungen bereitgestellt. Es werden auch verschiedene Sensor-Feedback-Anwendungen der Beleuchtungstechnik bereitgestellt, einschließlich Sensor-Feedback, das Lichtsensoren und Vorwärtsspannungssensoren umfasst. Es werden auch Beleuchtungsverfahren und - systeme bereitgestellt, die mit zeitbasierten Parametern arbeiten.

Zudem ist aus der US 2012/319616 A1 eine Leuchte bekannt. Die Leuchte kann LEDs enthalten, die jeweils Licht in eine bestimmte Zone auf einer Linse aussenden, wobei jede Zone ihre eigenen Fokaleigenschaften hat. Jede LED kann in eine (oder mehrere) Untermenge (n) gruppiert werden, die der Zone (n) entspricht (entsprechen), die von ihrem emittierten Licht getroffen wird (werden). Die LEDs können selektiv elektrisch steuerbar sein, so dass die durch jede Zone übertragene Lichtmenge durch das elektrische Steuersystem der Leuchte steuerbar sein kann. Da Licht, das durch verschiedene Zonen übertragen wird, aus der Leuchte mit verschiedenen Breiten austritt, kann das elektrische Steuersystem die bei jeder Breite austretende Lichtmenge direkt steuern. Durch Mischen von relativ schmalem Licht mit relativ breitem Licht in den richtigen Proportionen kann das elektrische Steuersystem des Scheinwerfers Licht mit jedem gewünschten Winkelprofil zwischen schmal und breit erzeugen. Man kann sich vorstellen, dass die Leuchte eine Steuerung hat, die sowohl einen Dimmer aufweist, der die optische Leistung oder Helligkeit der Leuchte steuern kann, als auch eine Breitensteuerung, die Werte zwischen schmalem und breitem Licht einstellen kann. Durch Variieren der relativen Beiträge der verschiedenen Strahlbreiten kann das Winkelprofil der Gesamtleistung variiert werden und kann vorteilhafterweise elektronisch ohne bewegliche Teile variiert werden.

Im Stand der Technik sind verschiedene Küchengeräte bekannt, die Beleuchtungseinheiten haben. Diese Beleuchtungseinheiten werden gewöhnlich manuell über eine an dem Küchengerät angebrachte Bedieneinheit oder eine Fernbedienung gesteuert.

Aus der DE 10 2013 213 185 A1 ist eine Unterbauhaube zur Montage in einem Küchenschrank bekannt, die einen Lüfterbaustein umfasst. Der Lüfterbaustein weist an zumindest einem Teil der Unterseite und zumindest einem Teil der Seitenflächen mindestens eine Filterzone auf. Weiterhin weist die Unterbauhaube mindestens eine Verfahrensvorrichtung zum vertikalen Verfahren des Lüfterbausteins auf. In einem Ausführungsbeispiel sind im hinteren Bereich der Unterseite des Lüfterbausteins zwei Beleuchtungselemente in Form von Lampen oder Strahlern eingebracht, über die der Herd oder die Arbeitsfläche unterhalb der Unterbauhaube zumindest teilweise beleuchtet werden können.

Die DE 10 2010 006 697 A1 offenbart eine Dunstabzugshaube mit einer vom Anwender zu bedienenden Steuereinheit für eine Absaugeinrichtung und gegebenenfalls für eine Beleuchtungseinrichtung. In einem Ausführungsbeispiel ist offenbart, dass wenn sich die Dunstabzugshaube in einem Raum befindet, in dem Dunkelheit herrscht, der Licht-/Helligkeitssensor den Bewegungssensor aktiviert, welcher bei der Registrierung einer Bewegung die Beleuchtung anschaltet. Die Beleuchtung wiederum ist mit einem vorprogrammierten Timer verbunden, der nach der eingestellten Zeit die Beleuchtung wieder ausschaltet, sofern keine Bewegung mehr vom Bewegungssensor registriert wird.

DE 10 2012 017 381 A1 offenbart eine Dunstabzugshaube, bei der bei einer Beleuchtungseinrichtung ein Sensor vorgesehen sein kann, durch dessen Messwerte die Steuerung des oder der Leuchtmittel manipulierbar ist.

In der WO 2015 155 020 A1 wird ein Beleuchtungsmodul für ein Haushaltsgerät beschrieben. Das Beleuchtungsmodul weist mindestens eine Lichtquelle und mindestens eine Sensoreinheit und mindestens eine Anschlusseinheit auf, die mit der Lichtquelle und der Sensoreinheit verbunden ist und zur Verbindung des Beleuchtungsmoduls mit zumindest einer Steuereinheit des Haushaltsgerätes dient. Der Helligkeitssensor kann zum Einschalten der Innenbeleuchtung verwendet werden.

Die JP 2006 017390 A beschreibt einen Wärmekocher, der Beleuchtungsmittel aufweist, um den Wärmeraum zu beleuchten. Hierbei ist ein Steuermittel für die Lichtquelle vorgesehen, das entweder die Farbe oder die Intensität des Lichts, das in den Wärmeraum abgegeben wird, anpasst. Hierbei kann die Spannung oder der Strom, der an die Lichtquelle angelegt wird, verändert werden.

In der DE 10 2015 200735 A1 ist ein Kochfeldsystem beschrieben, das eine Dunstabzugshaube und ein Kochfeld umfasst. Zudem ist ein Projektionsgerät vorgesehen. Am Paneel des Kochfeldes können visuelle Informationen angezeigt werden. Diese können hinsichtlich der Helligkeit und/oder Farbe eingestellt werden. Die Helligkeit und Farbe kann hierbei automatisch eingestellt werden.

In der EP 2 615 711 A2 wird eine Schaltung für ein Haushaltsgerät beschrieben, die eine Leiterplatte mit einem in Störfilter aufweist. Gemäß einer Ausgestaltung kann die Leiterplatte einen Bus oder ein Bussystem aufweisen. Hierüber können weitere externe Beleuchtungseinrichtungen angesteuert werden.

In der WO 2013/166445 A1 wird eine Dunstabzugsvorrichtung in Form eines Down-Draft-Assembleys beschrieben. An dieser Dunstabzugsvorrichtung kann eine Beleuchtungsvorrichtung vorgesehen sein. Hierbei können eine oder mehrere Linsen verwendet werden. Zudem kann die Vorrichtung einen Sensor aufweisen und das Beleuchtungssystem kann beispielsweise automatisch aufgrund von Umgebungslicht aktiviert werden.

Nachteilig an den Küchengeräten im Stand der Technik ist, dass die Beleuchtungsmittel aufgrund von der Bauart von Küchengeräten bedingten räumlichen Beschränkung häufig nicht optimal für die Beleuchtung positioniert sind. Weiterhin nachteilig ist, dass die Art und Weise der Beleuchtung bereits voreingestellt ist und daher nicht flexibel einstellbar ist.

Aufgabe der vorliegenden Erfindung ist es daher, die Nachteile des Standes der Technik zu überwinden. Der Erfindung liegt insbesondere die Aufgabe zugrunde ein Küchengerät mit einer Beleuchtungseinheit und ein Verfahren bereitzustellen, bei der beziehungsweise dem auf einfache und spezifische Weise geeignete Lichteigenschaften eingestellt werden können.

Der Erfindung liegt die Erkenntnis zu Grunde, dass diese Aufgabe gelöst werden kann, indem mindestens eine Beleuchtungseinheit an einem Küchengerät vorgesehen ist, die auf Grund von erfassten Parametern die Änderung zumindest einer Lichteinstellung steuern kann und somit die Ausgabe des Lichtes einer Beleuchtungseinheit an einem Küchengerät verändern werden kann.

Erfindungsgemäß wird die Aufgabe daher durch ein Küchengerät, eine Dunstabzugshaube ist, gelöst, das zumindest eine Beleuchtungseinheit mit mindestens einer Lichtquelle umfasst. Die zumindest eine Beleuchtungseinheit umfasst weiterhin eine Erfassungseinheit zum Erfassen von Parametern und eine Änderungseinheit, die mittels der erfassten Parameter eine Änderung zumindest einer Lichteinstellung steuert und die zumindest eine Beleuchtungseinheit zumindest zwei unterschiedliche Optiken mit unterschiedlichem Richtungswinkel und/oder Öffnungswinkel umfasst und die Parameter umfassen die Position des Nutzers.

Richtungsangaben, wie beispielsweise vorne, hinten, oben, oder seitlich werden im Folgenden, sofern nicht anders angegeben, bezüglich eines Küchengerätes im eingebauten Zustand verstanden. Vorne oder die Vorderseite bezeichnet hierbei die Seite, die dem Benutzer des Küchengerätes zugewandt ist. Hinten oder die Hinterseite ist die Seite, die dem Nutzer des Küchengerätes abgewandt ist. Seitlich oder die Seitenbereiche oder Seitenflächen sind die Flächen, die zwischen der Vorder- und Hinterseite angeordnet sind.

Im Sinne der vorliegenden Erfindung wird als Beleuchtungseinheit eine Einheit bezeichnet, die erfindungsgemäß an oder in einem Gehäuse eines Küchengerätes angeordnet ist. Vorzugsweise wird die Beleuchtungseinheit oder werden die Beleuchtungseinheiten in einem Bereich des Küchengerätes vorgesehen, wodurch sie einen Raum außerhalb des Gehäuses des Küchengerätes beleuchten können. Je nach Ausführungsvariante handelt es sich dabei vorzugsweise um eine Beleuchtungseinheit, mit der ein Bereich in der Umgebung eines Küchengerätes und/oder der Bereich eines anderen Küchengerätes zumindest teilweise angestrahlt bzw. ausgeleuchtet werden kann. Im Sinne der Erfindung ist die Umgebung eines Küchengerätes der Raum, in dem das Küchengerät betrieben wird. Die Beleuchtungseinheit ist gemäß der vorliegenden Erfindung eine Einheit, die zumindest über einen Teil der Oberfläche der Beleuchtungseinheit Licht nach außen abgibt. In einer Ausführungsform kann die Beleuchtungseinheit ein Innengehäuse aufweisen und das Licht wird über einen Teil der Gehäusewände abgegeben. Insbesondere ist die Beleuchtungseinheit vorzugsweise eine Funktionsbeleuchtung eines erfindungsgemäßen Küchengerätes.

In der Beleuchtungseinheit ist gemäß der Erfindung zumindest eine Lichtquelle zum emittieren sichtbaren Lichts vorgesehen. Zudem kann die Beleuchtungseinheit mindestens eine Halterung für die Lichtquelle und mindestens eine Kontaktstelle für die Anbindung der Lichtquelle an eine Steuereinheit umfassen, mittels welcher die Spannungsversorgung der Kontaktstelle eingestellt werden kann. Weiterhin kann die Lichtquelle an einen Lichtkreis des Küchengerätes, in dem die Beleuchtungseinrichtungen des Küchengerätes gesteuert werden, angebunden sein. Vorzugsweise umfasst die zumindest eine Lichtquelle zumindest ein Leuchtmittel. Leuchtmittel können insbesondere eine LED, eine Halogenlampe oder eine Glühlampe sein. Vorzugsweise ist das Leuchtmittel eine LED. Als LED wird eine Leuchtdiode (light emitting diode) bezeichnet.

Die Beleuchtungseinheit umfasst erfindungsgemäß mehrere Teile, erfindungsgemäß eine Erfassungseinheit und eine Änderungseinheit. Diese Teile können aber auch teilweise zusammengefasst sein. Als Erfassungseinheit wird erfindungsgemäß der Teil der Beleuchtungseinheit angesehen, der Parameter erfasst. Als Parameter sollen erfindungsgemäß eine beliebige Art von Parametern in der Umgebung eines Küchengerätes oder von einem Küchengerät bezeichnet werden. Die Erfassungseinheit ist in diesem Zusammenhang auf keine spezielle Methode der Erfassung von Parametern beschränkt. Die Erfassungseinheit ist vorzugsweise zum berührungslosen Erfassen, zum kontaktierenden Erfassen, zum Auswerten von Geräteeinstellungen, zum Auswerten von Messdaten, zum Auswerten von digitalen Informationen, Kombination dieser Möglichkeiten oder dergleichen ausgestaltet.

Die von der Erfassungseinheit erfassten Parameter können in der Erfassungseinheit und/oder in der Änderungseinheit verarbeitet werden. Die aus den Parametern erzeugten Daten werden im Folgenden als Daten bezeichnet.

Die Erfassungseinheit übermittelt die erfassten Parameter oder daraus erzeugte Daten an eine Änderungseinheit zumindest einer Beleuchtungseinheit. Die Übermittlung der Parameter oder Daten kann hierbei über eine drahtlose oder kabelgebundene Verbindung erfolgen. Eine drahtlose Verbindung bedeutet, dass die Übermittlung der Parameter oder Daten ohne direkte physikalische Verbindung zwischen der Erfassungseinheit und der Änderungseinheit erfolgt. Beispielsweise kann die drahtlose Verbindung zwischen der Erfassungseinheit und der Änderungseinheit über ein sogenanntes WLAN (Wireless Local Area Network), gegebenenfalls unter Einbindung des Internets, erfolgen.

Entsprechend der vorliegenden Erfindung werden die erfassten Parameter oder Daten von einer Erfassungseinheit an eine Änderungseinheit der Beleuchtungseinheit übermittelt. Als Änderungseinheit wird der Teil der Beleuchtungseinheit bezeichnet, der die Änderung zumindest einer Lichteinstellung steuert. Vorzugsweise ist die Änderungseinheit eine Steuereinheit. Weiterhin wird als Lichteinstellung erfindungsgemäß die Einstellung bezeichnet, die die Art und Weise der Ausgabe des Lichts einer Lichtquelle bestimmt. Somit kann bei unterschiedlichen Lichteinstellungen die Ausgabe des emittierenden Lichtes einer Lichtquelle, welches für den Betrachter sichtbar ist, unterschiedlich sein.

Indem bei dem erfindungsgemäßen Küchengerät eine Beleuchtungseinheit eine Änderung einer Lichteinstellung aufgrund von erfassten Parametern steuert und somit die Beleuchtung des Küchengerätes verändern kann, ergeben sich eine Reihe von Vorteilen. Zum einen, kann zumindest die Erfassungseinheit verschiedene Parameter erfassen, wodurch mittels der Änderungseinheit die Änderung verschiedener Lichteinstellungen gesteuert werden kann. Vorteilhaft daran ist, dass die Beleuchtung des erfindungsgemäßen Küchengeräts eine hohe Funktionalität bietet und auf einfache Weise auf verschiedene Nutzerszenarien und/oder Umgebungsbedingungen einstellbar ist. Somit kann in Abhängigkeit von den erfassten Parametern die Beleuchtung eines erfindungsgemäßen Küchengerätes spezifisch angepasst werden.

Vorteilhaft ist außerdem, dass durch die Erfassungseinheit der Nutzer zum Bedienen der Beleuchtungseinheit des Küchengerätes das Küchengerät selbst oder die Beleuchtungseinheit des Küchengerätes nicht berühren muss. Bedienungen der Beleuchtungseinheit des Küchengerätes sind somit auf einfache Weise möglich und können zum Beispiel auch mit verschmutzten oder belegten Händen ausgeführt werden.

Weiterhin vorteilhaft ist, dass bei Verwendung von LEDs, die in der erfindungsgemäßen Beleuchtungseinheit eingesetzt werden können, die Farbe des Leuchtmittels frei gewählt werden kann. Zudem ist die durch LEDs erzeugte Wärme gering, sodass eine Belüftung der Lichtquelle auch bei der Anordnung innerhalb eines Gehäuses nicht erforderlich ist. Weiterhin werden LEDs in der Regel mit Schutzkleinspannung betrieben. Defekte bedeuten daher keine Gefahr. Weiterhin sind LED-Lampen robust und unempfindlich gegen Erschütterungen. Schließlich weist eine LED eine große Lichtleistung auf, das heißt auch bei kleiner Lichtquelle ist bei einer LED die Menge der Lichtabgabe groß. Ein weiterer Vorteil bei der Verwendung von LEDs besteht darin, dass diese beispielsweise in Form einer Kette oder eines Bandes vorliegen können. Diese Kette beziehungsweise dieses Band kann auf einfache Weise in einem Gehäuse der Beleuchtungseinheit angeordnet werden. Schließlich weisen LEDs in der Regel eine flache ebene Form auf, so dass die Tiefe des Gehäuses der Beleuchtungseinheit gering gewählt werden kann.

Weiterhin vorteilhaft ist, dass viele Küchengeräte ohnehin über Beleuchtungselemente verfügen bzw. mit solchen verbunden sind. Somit kann zumindest eine Beleuchtungseinheit mit einer Erfassungseinheit und einer Änderungseinheit in kompakter Bauweise in solche Elemente integriert werden und dabei können zugleich deren vorhandene Gehäuseöffnungen genutzt werden. Somit müssen keine zusätzlichen Öffnungen, Durchbrüche oder dergleichen in einem Küchengerät geschaffen werden. Des Weiteren bleiben damit auch mehr Designfreiheiten für das Küchengerät erhalten. Durch die Integration der Beleuchtungseinheit in ein bereits bestehendes Beleuchtungselement besteht zudem die Möglichkeit, bestehende Küchengeräte auf einfache Weise und ohne größere Modifikation des Gehäuses nachzurüsten.

Gemäß einer Ausführungsform der Erfindung, ist die zumindest eine Lichtquelle direkt oder über ein Bus-System ansteuerbar. Als direkt ansteuerbar wird erfindungsgemäß eine Ansteuerung bezeichnet, bei der die Lichtquellen über jeweils einzelne voneinander unabhängige Übertragungswege angesteuert werden. Als Bus-System wird erfindungsgemäß ein System bezeichnet, bei dem mehrere Lichtquellen über einen gemeinsamen Übertragungsweg gesteuert werden können, wobei einzelne Lichtquellen nicht an der Steuerung zwischen anderen Lichtquellen beteiligt sind. Vorteilhaft an einem Bus-System ist, dass die Ansteuerung der zumindest einen Lichtquelle auf einfache Weise erfolgt.

In einer weiteren Ausführungsform der Erfindung umfasst die Beleuchtungseinheit zumindest zwei Lichtquellen, wobei die Lichtquellen unabhängig voneinander steuerbar sind. Als unabhängig voneinander steuerbar bezeichnet erfindungsgemäß, dass jede Lichtquelle einzeln steuerbar ist und diese Ansteuerung unabhängig davon ist, wie eine andere Lichtquelle gesteuert wird. Vorzugsweise kann die Helligkeit zweier Lichtquellen unterschiedlich voneinander eingestellt sein. Vorteilhaft an dieser Ausführungsform ist, dass die Leistung zwischen den Lichtquellen verteilt werden kann. Somit können die Beleuchtung der einzelnen Lichtquellen auf Grund der entsprechenden Nutzereinstellungen oder den Umgebungsbedingungen des Küchengerätes einzeln und gegebenenfalls unterschiedlich angepasst werden. Beispielsweise können dadurch einzelne Kochzonen eines Kochfeldes, das das Küchengerät darstellt, das durch die Beleuchtungseinheit beleuchtet wird, separat ausgeleuchtet werden.

In einer weiteren Ausführungsform der Erfindung ist die Erfassungseinheit in die Beleuchtungseinheit integriert oder extern angeordnet. Ist die Erfassungseinheit in einer Beleuchtungseinheit integriert, so wird erfindungsgemäß eine Erfassungseinheit bezeichnet, die auf einem gemeinsamen Träger (zum Beispiel Platine) mit der Beleuchtungseinheit angeordnet und/oder in einem gemeinsamen Einheitsgehäuse angeordnet ist. Somit ergibt sich vorteilhaft, dass eine kompakte Baueinheit geschaffen werden kann, wodurch die Montage der Beleuchtungseinheit vereinfacht werden kann.

Weiterhin kann die erfindungsgemäße Erfassungseinheit extern angeordnet sein. Als extern angeordnet, wird erfindungsgemäß eine Erfassungseinheit bezeichnet, die vorzugsweise von der Änderungseinheit einer Beleuchtungseinheit beabstandet vorgesehen ist und separat zur Änderungseinheit betrieben werden kann. Aus dieser Ausführungsform ergibt sich vorteilhaft, dass die Änderung einer Lichteinstellung mittels einer Änderungseinheit einer Beleuchtungseinheit nicht zwangsweise an dem Ort der Erfassung der Parameter erfolgen muss. Dadurch kann ein flexibles Anordnen der Erfassungseinheit zum Erfassen von Parametern erfolgen. Beispielsweise können Sensoren als Erfassungseinheiten an einer Dunstabzugshaube, die das Küchengerät darstellt, an der Unterseite oder Vorderseite der Sichthaube vorgesehen werden. Weiterhin ist der Betriebszustand der Erfassungseinheit unabhängig vom Betriebszustand der Änderungseinheit und somit wird der Aufbau des Küchengerätes vereinfacht.

Gemäß einer weiteren Ausführungsform der Erfindung ist die Erfassungseinheit ein Sensor, eine Nutzereingabeeinheit oder eine Schnittstelle zum Empfangen von externen Informationen. Als Sensor wird vorzugsweise ein optischer Sensor bezeichnet. Vorteilhaft an dieser Ausführungsform ist, dass die Erfassung der Parameter durch einen Sensor automatisch erfolgt und somit die Änderungseinheit automatisch die Änderung der Lichteinstellung steuert. Demnach erfolgt eine automatische Änderung der Ausgabe des Lichtes eines erfindungsgemäßen Küchengerätes. Eine manuelle Eingabe eines Nutzers ist somit nicht erforderlich, wodurch die Beleuchtung der Umgebung eines erfindungsgemäßen Küchengerätes oder die Beleuchtung eines anderen Küchengerätes auf einfache Weise spezifisch verändert werden kann.

Die Nutzereingabeeinheit stellt vorzugsweise eine App (Application software) auf einem mobilen Endgerät dar. Ein mobiles Endgerät stellt einen tragbaren Computer, beispielsweise einen Tablet PC oder ein Mobiltelefon mit Computerfunktionalitäten, insbesondere ein Smartphone dar. Der Nutzer hat somit die Möglichkeit, die Parameter in eine App einzugeben. Vorteilhaft an dieser Ausführungsform ist, dass der Nutzer die Änderung zumindest einer Lichteinstellung durch die manuelle Eingabe von Parametern in die App gezielt steuern kann und somit auf einfache Weise die Beleuchtung eines Küchengerätes an seine individuellen Bedürfnisse anpassen kann.

Die Schnittstelle zum Empfangen von externen Informationen ist erfindungsgemäß eine Schnittstelle, die drahtlos Informationen aus dem Internet oder von einer externen Datenbank abrufen kann. Vorzugsweise sind externe Informationen, die Tageszeit, das Wetter oder der Sonnenstand in Abhängigkeit der Erdbezogenen Positionsdaten. Vorteilhaft an dieser Ausführungsform ist, dass die Erfassung der externen Informationen automatisch erfolgt und somit keine zusätzliche Eingabe durch den Nutzer erforderlich ist. Weiterhin vorteilhaft ist, dass dadurch die Beleuchtung eines Küchengerätes automatisch und spezifisch an die erfassten Parameter angepasst wird.

Durch die Verwendung der Tageszeit als Parameter für die Änderung der Lichteinstellung kann beispielsweise ein Blenden des Nutzers verhindert werden. Öffnet ein Nutzer nachts um 3 Uhr ein Küchengerät, beispielsweise einen Kühlschrank, so wird er bisher von der von der Beleuchtungseinheit des Kühlschrankes ausgegebenen Licht geblendet, da dieses in der regelt kaltweiß ist. Wird hingegen durch die Änderungseinheit bei Erfassen einer Tageszeit, die in der Nacht liegt, die Farbtemperatur so eingestellt, dass das ausgegebene Licht warmweiß ist, so wird der Nutzer nicht geblendet.

Die Farbtemperatur ist definiert als die Temperatur, die zu einer bestimmten Farbe des Lichts gehört, das von einer Strahlungsquelle ausgeht. Konkret ist es die Temperatur, deren Lichtwirkung bei gleicher Helligkeit und unter festgelegten Beobachtungsbedingungen der zu beschreibenden Farbe am ähnlichsten ist. Weiterhin wird zwischen warmen und kalten Farben unterschieden, wobei warme Farben durch Rottöne und kalte Farben durch Blautöne dominiert werden. Die Farbtemperatur umfasst einen Bereich von 2000 Kelvin bis 8000 Kelvin.

In einer weiteren Ausführungsform der Erfindung sind die Parameter Umgebungsparameter. Als Umgebungsparameter werden erfindungsgemäß die Parameter bezeichnet, die von der Erfassungseinheit in einem Raum, in dem das Küchengerät angeordnet ist, erfasst werden. Vorteilhaft an dieser Ausführungsform ist, dass die Parameter die gegenwärtigen Umgebungsbedingungen innerhalb des Raumes widerspiegeln und somit die Beleuchtung an diese Bedingungen spezifisch angepasst werden kann.

In einer bevorzugten Ausführungsform der Erfindung umfassen die Umgebungsparameter die Helligkeit des Umgebungslichts. Vorteilhaft an dieser Ausführungsform ist, dass die Helligkeitsregelung der Gesamtbeleuchtung eines Küchengeräts automatisch an die natürliche Umgebungshelligkeit angepasst wird. Vorzugsweise wird die Beleuchtung eines Küchengeräts bei einer starken Umgebungshelligkeit gedrosselt, wodurch Energie gespart werden kann.

In einer weiteren bevorzugten Ausführungsform der Erfindung umfasst die Lichteinstellung die Farbtemperatur, die Lichtintensität, die Richtung der Lichtausgabe, den Ausleuchtungsbereich und/oder die Dauer der Lichtausgabe. Im Sinne der Erfindung wird als Farbtemperatur ein Maß bezeichnet, um den jeweiligen Farbeindruck einer Lichtquelle zu bestimmen.

Als Lichtintensität im Sinne der Erfindung wird die Stärke des Lichts bezeichnet. Insbesondere stellt die Lichtintensität die Ausgabe der Intensität der Lichtquelle dar. Die Intensität ist der Anteil der gesamten Lichtmenge, die von einer Lichtquelle in einer gegebenen Raumrichtung emittiert wird.

Als Richtung der Lichtausgabe wird erfindungsgemäß das Wirkungsziel bzw. die Wirkungsrichtung der Ausgabe des Lichtes einer Lichtquelle in Bezug auf die Umgebung eines Küchengerätes oder auf ein anderes Küchengerät bezeichnet. Die Lichtrichtung bestimmt die Wirkung des ausgestrahlten Lichtes auf die entsprechend angestrahlten Bereiche. Der gezielte Einsatz der verwendeten Richtung des Lichtes entscheidet über die räumliche Tiefe, Plastizität und Erkennbarkeit einer Umgebung oder eines Küchengerätes.

Der Ausleuchtungsbereich ist erfindungsgemäß der Bereich in einem Raum oder der Bereich eines Küchengerätes, beispielsweise eines Kochfeldes, oder der Bereich einer Arbeitsfläche der mittels des emittierenden Lichtes einer Lichtquelle ganz oder teilweise ausgeleuchtet bzw. angestrahlt wird.

Die Dauer der Lichtausgabe kann die Ausgabedauer selber sowie gegebenenfalls einzuhaltende Intervalle zwischen den Ausgaben des Lichtes umfassen. Demnach kann die Ausgabe des Lichtes beispielsweise ein Blinksignal sein.

Vorteilhaft an diesen Ausführungsformen ist, dass die Ausgabe des Lichtes auf einfache Art und Weise mittels der Lichteinstellung flexibel und spezifisch eingestellt werden kann, um an die Bedürfnisse des Nutzers oder an die Parameter eines Raumes oder anderen Küchengerätes angepasst zu werden.

Gemäß einer Ausführungsform der Erfindung umfasst die Beleuchtungseinheit eine Speichereinheit, insbesondere eine Speichereinheit für individuelle Nutzerprofile mit unterschiedlichen Lichteinstellungen. Als Speichereinheit wird erfindungsgemäß eine Einheit bezeichnet, die Daten speichert. Vorzugsweise umfassen die Daten die Nutzereingabe von Parametern über eine Nutzereingabeeinheit und die entsprechend zumindest eine geänderte Lichteinstellung. Insbesondere stellen diese Daten Nutzerprofile dar. Alternativ können die Daten auch die Lichteinstellung auf Grund von Parametern darstellen, die automatisch von einer Erfassungseinheit erfasst worden sind. Vorteilhaft an dieser Ausführungsform ist, dass die Beleuchtung durch Auswahl eines Nutzerprofils individuell und spezifisch an den jeweiligen Nutzer angepasst werden kann. Somit ist die Lichteinstellung der Beleuchtung eines erfindungsgemäßen Küchengerätes auf einfache und flexible Weise auf die Bedürfnisse unterschiedlicher Nutzer anzupassen.

Erfindungsgemäß ist das Küchengerät eine Dunstabzugshaube. Vorzugsweise ist das Küchengerät eine Dunstabzugshaube, bei der die Beleuchtungseinheit in die Sichthaube integriert ist. Insbesondere ist die Beleuchtungseinheit derart in die Sichthaube einer Dunstabzugshaube integriert, dass die Lichtquelle der Beleuchtungseinheit derart angeordnet ist, dass diese nach unten auf das, unter der Dunstabzugshaube angeordnete Kochfeld leuchtet, welches somit vollständig oder teilweise beleuchtet werden kann.

In einer weiteren Ausführungsform der Erfindung umfasst die Erfassungseinheit eine Kamera. Als Kamera wird in der vorliegenden Erfindung ein Bauteil bezeichnet, welches statische oder sich bewegende Bilder innerhalb der Umgebung eines Küchengerätes aufzeichnet. Beispielsweise erfasst eine Kamera, die an der Unterseite einer Sichthaube einer Dunstabzugshaube angeordnet ist, ob auf dem Kochfeld, das unterhalb der Dunstabzugshaube angeordnet ist, Töpfe stehen. Alternativ kann die Kamera die Position eines Nutzers vor einem Küchengerät erfassen. Vorzugsweise leitet die Kamera die erfassten Bilder direkt an die Änderungseinheit weiter. Eine weitere Alternative ist, dass die Kamera die aufgezeichneten Bilder auf einem digitalen Speichermedium zwischenspeichert. Vorteilhaft an dieser Ausführungsform ist, dass die Parameter automatisch erfasst werden und somit eine zusätzliche Interaktion des Nutzers nicht erforderlich ist.

Erfindungsgemäß umfassen die Parameter die Position des Nutzers. In einer weiteren Ausführungsform der Erfindung umfassen die Parameter einen Betriebszustand des Küchengerätes oder eines weiteren Küchengerätes. Vorzugsweise wird in Abhängigkeit der Position des Nutzers die Beleuchtung auf einen bestimmten Bereich ausgerichtet, der im Wirkkreis des Nutzers liegt. Vorzugsweise steht der Nutzer vor einem Kochfeld, somit wird die Beleuchtung auf das Kochfeld fokussiert, um einen spezifischen Bereich des Kochfeldes, beispielsweise einzelne Kochzonen anzustrahlen. Alternativ steht der Nutzer neben einem Kochfeld vor einer Arbeitsfläche. In diesem Fall wird die Beleuchtung demnach angepasst, dass ein größerer Bereich ausgeleuchtet wird, nämlich das Kochfeld und die angrenzende Arbeitsfläche. Hierzu kann beispielsweise der Fokus der Beleuchtungsvorrichtung, beispielsweise durch eine Verwendung einer Weitwinkel-Optik, aufgeweitet werden. Vorteilhaft an dieser Ausführungsform ist, dass auf Grund der Position des Nutzers die Beleuchtung automatisch angepasst wird.

Als ein Betriebszustand wird beispielsweise eine beliebige Art von Betriebszuständen eines Küchengerätes, beispielsweise eines Kochfeldes, das durch die Beleuchtungseinheit eines anderen Küchengerätes, beispielsweise einer Dunstabzugshaube, beleuchtet wird, bezeichnet. Vorzugsweise wird als Betriebszustand erfasst, ob ein Gerät ein- oder ausgeschaltet ist oder ob eventuell lediglich ein Teil eines Küchengerätes eingeschaltet ist. Vorteilhaft an dieser Ausführungsform ist, dass der Betriebszustand eines Küchengerätes automatisch erfasst wird. Weiterhin vorteilhaft ist, dass der Nutzer auf Grund einer geänderten Beleuchtung auf den Betriebszustand eines Küchengerätes aufmerksam wird. Insbesondere eine Ausgabe des Lichtes in Intervallen vermittelt dem Nutzer eine Art Warnblinken und signalisiert, dass eine sofortige Maßnahme durch den Nutzer erforderlich ist. Eine solche Maßnahme kann das Ausschalten eines durch ein Küchengerät beleuchteten Küchengerätes beinhalten. Wird beispielsweise durch eine an einer Dunstabzugshaube vorgesehenen Erfassungseinheit, die eine Kamera darstellen kann, erkannt, dass sich auf dem Kochfeld keine Töpfe oder andere Gegenstände als Töpfe befinden, und liegt eine Information vor, dass das Kochfeld eingeschaltet ist, beispielsweise über eine Vernetzung der Dunstabzugshaube mit dem Kochfeld, so kann die Beleuchtungseinheit ein Warnblinken ausgeben. Wird diese Warnmeldung von dem Nutzer nicht quittiert, beispielsweise an einem Bedienelement der Dunstabzugshaube oder des Kochfeldes, so kann durch die Dunstabzugshaube, beispielsweise durch die Erfassungseinheit ein Befehl ausgegeben werden, dass das Kochfeld ausgeschaltet werden soll.

Erfindungsgemäß umfasst die zumindest eine Beleuchtungseinheit zumindest zwei unterschiedliche Optiken mit unterschiedlichem Richtungswinkel und/oder Öffnungswinkel. Als Optik wird erfindungsgemäß eine weitere Einheit, insbesondere ein Bauteil, der zumindest einen Beleuchtungseinheit bezeichnet. Die Optik ist gemäß der Erfindung vorzugsweise vor der zumindest einen Lichtquelle angeordnet, um die Ausgabe des Lichtes zu verändern. Vorzugsweise ist die Optik eine Linse, ein Reflektor oder ein Lichtleitelement.

Als Optik mit Richtungswinkel wird erfindungsgemäß eine Optik verstanden, die die Richtung der Ausrichtung der Beleuchtung vorgibt. Die Ausrichtung der Beleuchtung ist dabei nicht starr durch einen Richtungswinkel vorgegeben, vielmehr ist es möglich die Richtung variabel einzustellen, beispielsweise durch ein Verschwenken.

Als Optik mit Öffnungswinkel wird erfindungsgemäß eine Optik bezeichnet, die die Breite des Lichtkegels, welcher von der Lichtausgabe einer Lichtquelle erzeugt wird, bestimmt. Somit kann mittels des Öffnungswinkels ein breiter oder schmaler Lichtkegel erzeugt werden. Auf Grund der unterschiedlichen Öffnungswinkel unterscheidet man zwischen einer Weitwinkel-Optik und einer fokussierenden Optik. Bei der Weitwinkel-Optik ist der Lichtkegel ausgeweitet und breit, wodurch ein größerer Bereich ausgeleuchtet wird. Bei der fokussierenden Optik ist dahingegen, der Lichtkegel schmal und strahlt daher nur einen bestimmten Bereich an.

Erfindungsgemäß ist vorgesehen, dass die mindestens zwei Optiken unterschiedlich sind. Somit kann die Beleuchtung auf einfache und flexible Weise an die Bedürfnisse eines Nutzers, auf Grund der erfassten Parameter, angepasst werden.

Vorteilhaft an einer Optik mit Richtungswinkel ist, dass die Beleuchtung flexibel in verschiedene Richtungen erfolgen kann. Weiterhin vorteilhaft ist, dass wenn zwei Optiken unterschiedliche Richtungswinkel aufweisen, die Lichtkegel über Kreuz ausgestrahlt werden können, wodurch ein größerer Bereich ausgeleuchtet werden kann.

Vorteilhaft an einer Optik mit Öffnungswinkel ist, dass somit spezifisch einstellbar ist, ob ein Bereich komplett ausgeleuchtet werden soll oder ob lediglich ein Teil eines Bereiches angestrahlt werden soll. Somit ist sowohl eine fokussierende Beleuchtung als auch eine weite Ausleuchtung möglich.

Weiterhin vorteilhaft ist an dieser Ausführungsform, dass die Vorteile der jeweiligen Optiken kombiniert werden können, da die zumindest eine Beleuchtungseinheit zwei unterschiedliche Optiken aufweist. Somit kann die Beleuchtung spezifisch an die Umgebung oder Nutzereinstellungen angepasst werden.

In einer weiteren Ausführungsform der Erfindung umfassen die Parameter die Farbtemperatur des Umgebungslichts. Im Stand der Technik sind Küchengeräte bekannt, bei denen die Farbtemperatur manuell über eine mechanische Verstellung eines Potentiometers erfolgt. Nachteilig ist jedoch, dass die Einstellung weder einfach noch intuitiv ist. Des Weiteren ist die Farbeinstellung mit einem erheblichen Aufwand verbunden, da zunächst das Gehäuse des Küchengerätes abmontiert werden muss um die Farbtemperatur ändern zu können.

Vorteilhaft an dieser Ausführungsform ist, dass die Farbtemperatur der Gesamtbeleuchtung eines Küchengerätes an die natürliche Umgebungstemperatur automatisch angepasst werden kann. Somit ist keine weitere oder aufwändige Interaktion des Nutzers notwendig.

Gemäß einem weiteren Aspekt betrifft die Erfindung ein Verfahren zur Betätigung mindestens einer Beleuchtungseinheit eines Küchengerätes, die mindestens eine Lichtquelle aufweist. Parameter Z f , die die Position des Nutzers umfassen, werden an einer Erfassungseinheit der Beleuchtungseinheit erfasst und mittels der erfassten Parameter wird eine Änderung zumindest einer Lichteinstellung durch eine Änderungseinheit der Beleuchtungseinheit gesteuert.

Gemäß einer Ausführungsform des erfindungsgemäßen Verfahrens erfasst die Erfassungseinheit die Parameter automatisch und/oder der Nutzer stellt die Parameter in der Erfassungseinheit ein.

Gemäß der Ausführungsform des erfindungsgemäßen Verfahrens, umfasst zumindest eine Beleuchtungseinheit zumindest zwei unterschiedliche Optiken und wahlweise wird eine Lichtquelle der Beleuchtungseinheit, die einer Optik zugeordnet ist, aktiviert oder eine Optik wird der Lichtquelle zugeordnet. In dieser Ausführungsform ist die Lichtquelle der erfindungsgemäßen Beleuchtungseinheit hinter den Optiken angeordnet.

Vorteile und Merkmale, die bezüglich des erfindungsgemäßen Küchengerätes beschrieben, gelten - soweit anwendbar - entsprechend für das erfindungsgemäße Verfahren und umgekehrt.

Die Erfindung wird im Folgenden erneut unter Bezugnahme auf die beiliegenden Zeichnungen erläutert es zeigen:
- Figur 1:: eine schematische Blockdarstellung einer Ausführungsform eines erfindungsgemäßen Küchengerätes;
- Figur 2a:: eine schematische Darstellung von Lichtkegeln, die auf Grund einer Weitwinkel-Optik erzeugt werden;
- Figur 2b:: eine schematische Darstellung von Lichtkegeln, die auf Grund einer fokussierenden Optik erzeugt werden;
- Figur 3a:: eine schematische Detailansicht der Beleuchtung eines Kochfeldes mittels weiter Lichtkegel nach Figur 2a;
- Figur 3b:: eine schematische Detailansicht der Beleuchtung eines Kochfeldes mittels fokussierter Lichtkegel nach Figur 2b;
- Figur 4:: eine schematische Blockdarstellung einer zweiten Ausführungsform eines erfindungsgemäßen Küchengerätes.

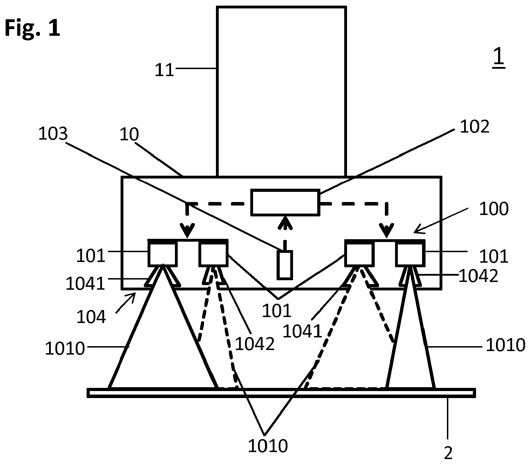

In Figur 1 ist eine Ausführungsform eines erfindungsgemäßen Küchengerätes 1 gezeigt.

In dieser Figur ist eine Dunstabzugshaube als ein Küchengerät 1 dargestellt. Die Dunstabzugshaube 1 ist beispielsweise oberhalb eines Kochfeldes 2 montiert und dient dem Absaugen von Kochdünsten. Die Dunstabzugshaube 1 besteht aus einer Sichthaube 10 und einem Kamin 11, der sich nach oben an der Sichthaube 10 anschließt. In der Sichthaube 10 sind in dieser Ausführungsform zwei Beleuchtungseinheiten 100 integriert. In der Sichthaube 10 kann aber auch nur eine Beleuchtungseinheit 100 integriert sein. In der dargestellten Ausführungsform umfasst jede Beleuchtungseinheit 100 zwei Lichtquellen 101. Erfindungsgemäß umfasst die Beleuchtungseinheit 100 zumindest eine Lichtquelle 101. In der vorliegenden Ausführungsform werden die Lichtquellen 101 über ein Bus-System angesteuert. Die Lichtquellen 101 können aber auch direkt angesteuert werden (nicht dargestellt). In der dargestellten Ausführungsform sind die Lichtquellen 101 im unteren Bereich der Sichthaube 10 angeordnet, um das unter der Dunstabzugshaube 1 angeordnete Kochfeld 2 anzustrahlen. Somit erzeugt das von einer Lichtquelle 101 ausgegebene Licht jeweils einen Lichtkegel 1010, der zumindest teilweise das Kochfeld 2 anstrahlt. Die Lichtkegel 1010 können aber auch das komplette Kochfeld 2 ausleuchten (nicht dargestellt). Weiterhin können die Lichtquellen 101 unabhängig voneinander angesteuert werden, wodurch eine Verteilung der Lichtintensität möglich ist. In der dargestellten Ausführungsform ist die Lichtintensität zwischen jeweils zwei Lichtquellen 101 derart aufgeteilt, dass eine Lichtquelle 101 eine 100 %ige Leistung aufweist (Lichtkegel 1010 mit durchgezogener Linie) und die andere Lichtquelle 101 eine Leistung von 0% (Lichtkegel 1010 mit gestrichelter Linie) aufweist. Des Weitern ist eine Mischung der Lichtintensität zwischen den Lichtquellen möglich (nicht dargestellt).

Weiterhin umfasst die Beleuchtungseinheit 100 eine Erfassungseinheit 103 zum Erfassen von Parametern. In der dargestellten Ausführungsform ist die Erfassungseinheit 103 ein Sensor zum automatischen Erfassen von Umgebungsparametern. Zumindest ein Umgebungsparameter kann hierbei die Helligkeit der natürlichen Umgebung in einem Raum sein. Weiterhin kann die Erfassungseinheit 103 eine Kamera oder eine Nutzereingabeeinheit darstellen (nicht dargestellt). Anstelle von Umgebungsparametern kann auch die Position des Nutzers oder der Betriebszustand des Küchengerätes 1 oder eines anderen Küchengerätes 1 als Parameter aufgefasst werden. In der dargestellten Ausführungsform ist die Erfassungseinheit 103 extern zu der Beleuchtungseinheit 100 angeordnet. Alternativ kann die Erfassungseinheit 103 aber auch in der Beleuchtungseinheit 100 in direkter Verbindung zur Änderungseinheit 102 integriert sein (nicht dargestellt).

Weiterhin umfasst die Beleuchtungseinheit 100 eine Änderungseinheit 102, wobei in der dargestellten Ausführungsform die Änderungseinheit 102 eine Steuerung bzw. Steuereinheit ist.

Wie es sich aus der schematischen Darstellung in der Figur 1 ergibt übermittelt die Erfassungseinheit 103 die ermittelten Parameter oder Daten an eine Änderungseinheit 102 auf Grundlage derer die Änderungseinheit 102 eine Änderung in der Lichteinstellung steuert. Die Lichteinstellung bestimmt die Art und Weise, in der das Licht von einer Lichtquelle 101 ausgegeben wird. In der vorliegenden Ausführungsform ist die Lichteinstellung der Ausleuchtungsbereich. Weiterhin kann die Lichteinstellung auch die Farbtemperatur, die Richtung der Lichtausgabe, die Lichtintensität oder die Dauer der Lichtausgabe sein.

Die Übermittlung der Parameter oder Daten von der Erfassungseinheit 103 an die Änderungseinheit 102 erfolgt erfindungsgemäß beispielsweise über eine drahtlose Kommunikation, beispielsweise über WLAN.

Weiterhin umfasst die Beleuchtungseinheit in der dargestellten Ausführungsform unterschiedliche Optiken 104, die vor der jeweiligen Lichtquelle 101 angeordnet sind. Die Optiken 104 unterscheiden sich in der dargestellten Ausführungsform dadurch, dass sie unterschiedliche Öffnungswinkel aufweisen. Weiterhin können die Optiken 104 anstelle oder zusätzlich zu den Öffnungswinkeln auch Richtungswinkel aufweisen (nicht dargestellt). In der dargestellten Ausführungsform werden die Optiken als Weitwinkel-Optik 1041 und als fokussierende Optik 1402 bezeichnet. Bei der Weitwinkel-Optik 1041 sind die Lichtkegel 1010 sehr breit und somit ausgeweitet, wodurch ein größerer Bereich des Kochfeldes 2 ausgeleuchtet werden kann. Durch die fokussierende Optik 1042 sind die Lichtkegel 1010 sehr schmal und somit fokussiert, wodurch lediglich ein Teil des Kochfeldes 2 angestrahlt wird.

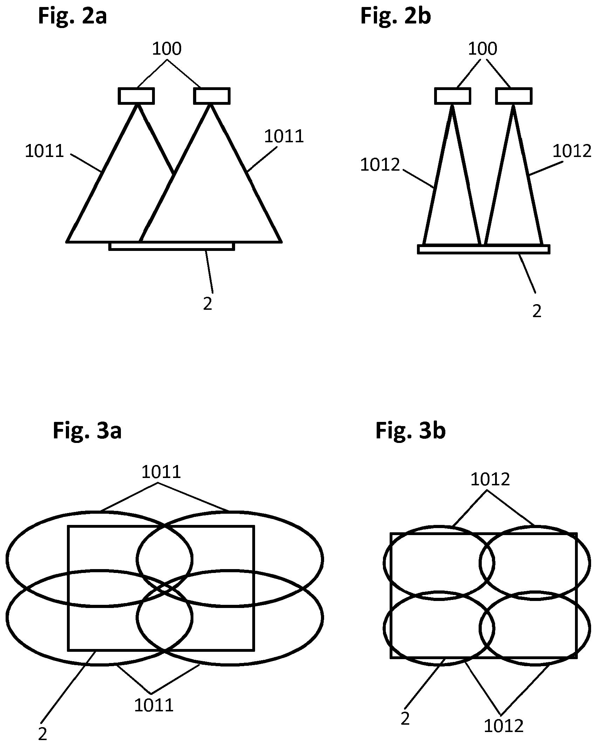

Figur 2a zeigt zwei Beleuchtungseinheiten 10 eines erfindungsgemäßen Küchengerätes 1 (nicht dargestellt), die jeweils zumindest eine Lichtquelle 101 und eine Optik 104 mit demselben Öffnungswinkel umfassen. Alternativ können die Optiken 104 auch unterschiedliche Öffnungswinkel aufweisen (nicht dargestellt). In der dargestellten Ausführungsform ist die Optik (in Figur 2a nicht gezeigt) der jeweiligen Beleuchtungseinheit 10 eine Weitwinkel-Optik (in Figur 2a nicht gezeigt). Weiterhin sind schematisch Lichtkegel 1011 gezeigt, welche durch die Ausgabe des Lichtes einer Lichtquelle (nicht dargestellt) einer Beleuchtungseinheit 100 erzeugt werden und somit in dieser Ausführungsform ein Kochfeld 2 anstrahlen. Die Lichtkegel 1010 sind in der dargestellten Ausführungsform auf Grund der Weitwinkel-Optik (in Figur 2a nicht gezeigt) sehr breit und ausgeweitet. Die Lichtkegel 1010 überlappen sich in der Ausleuchtung des Kochfeldes 2, somit wird der gesamte Bereich des Kochfeldes 2 und der Bereich darüber hinaus, beispielsweise eine Arbeitsfläche, ausgeleuchtet.

Die Figur 2b entspricht im Wesentlichen der schematischen Darstellung der Figur 2a. Die Figur 2b unterscheidet sich von der Figur 2a darin, dass die zwei dargestellten Beleuchtungseinheiten 100 jeweils eine Fokussierende Optik (in Figur 2b nicht gezeigt) umfassen. Die Lichtkegel 1012 sind daher im Vergleich zu den Lichtkegeln 1011 der Figur 2a viel schmaler und überlappen sich nicht in der Ausleuchtung des Kochfeldes 2. Demnach werden in der dargestellten Ausführungsform lediglich Bereiche des Kochfeldes 2, beispielsweise Kochzonen, teilweise bzw. fokussiert angestrahlt.

In der Figur 3a wird eine Detailansicht der Ausleuchtung eines Kochfeldes 2 dargestellt. Die Ausleuchtung des Kochfeldes 2 entspricht in dieser Ausführungsform der in Figur 2a gezeigten Beleuchtung, die auf Grund einer Beleuchtungseinheit 100, die eine Weitwinkel-Optik (nicht dargestellt) umfasst, erzeugt wird. In dieser Ausführungsform überlappen sich die Lichtkegel 1011 in einer solchen Art und Weise, dass das gesamte Kochfeld 2 ausgeleuchtet wird und darüber hinaus beispielsweise auch eine angrenzende Arbeitsfläche (nicht dargestellt) beleuchtet werden kann.

In Figur 3b ist die Beleuchtung eines Kochfeldes 2 dargestellt, das mittels schmaler Lichtkegel 1012 im Vergleich zu den Lichtkegeln 1011 in Figur 3a angestrahlt wird. Die Ausleuchtung des Kochfeldes 2 entspricht in dieser Ausführungsform der in Figur 2b gezeigten Beleuchtung, die mittels einer Beleuchtungseinheit 100, die eine fokussierende Optik (nicht dargestellt) umfasst, erzeugt wird. In dieser Ausführungsform leuchten die Lichtkegel 1012 nicht, wie die Lichtkegel 1011 aus Figur 3a, das gesamte Kochfeld 2 aus. Die Überlappung der Lichtkegel 1012 ist sehr gering und somit wird das Kochfeld 2 nur teilweise und fokussiert beleuchtet. Eine an das Kochfeld 2 angrenzende Arbeitsfläche (nicht dargestellt) wird durch die schmalen Lichtkegel 1012 nicht angestrahlt.

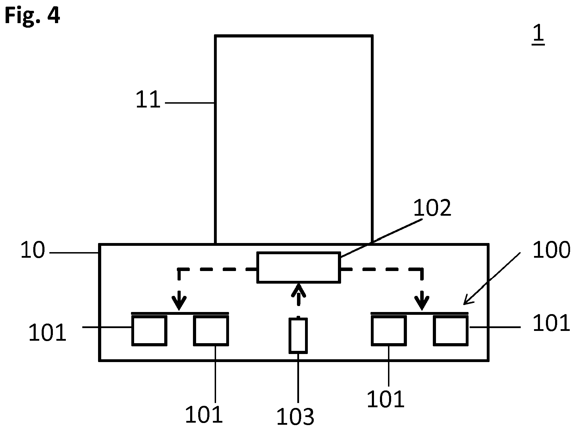

Figur 4 zeigt eine zweite Ausführungsform eines erfindungsgemäßen Küchengerätes 1. In der dargestellten Ausführungsform ist das Küchengerät 1 eine Dunstabzugshaube. Die Dunstabzugshaube 1 besteht aus einer Sichthaube 10 und einem Kamin 11, der sich nach oben an der Sichthaube 10 anschließt. In der Sichthaube 10 sind in dieser Ausführungsform zwei Beleuchtungseinheiten 100 integriert. In der Sichthaube 10 kann aber auch nur eine Beleuchtungseinheit 100 integriert sein. Die Beleuchtungseinheiten 100 umfassen jeweils zwei Lichtquellen 101. Erfindungsgemäß kann die zumindest Beleuchtungseinheit 100 auch nur eine Lichtquelle 101 umfassen. In der vorliegenden Ausführungsform werden die Lichtquellen 101 über ein Bus-System angesteuert. Alternativ ist eine direkte Ansteuerung jeder einzelnen Lichtquelle 101 möglich (nicht dargestellt). In der dargestellten Ausführungsform sind die Lichtquellen 101 im unteren Bereich der Sichthaube 10 angeordnet, um das unter der Dunstabzugshaube 1 angeordnete Kochfeld 2 anzustrahlen.

Weiterhin umfasst die Beleuchtungseinheit 100 eine Erfassungseinheit 103 zum Erfassen von Parametern. In der dargestellten Ausführungsform ist die Erfassungseinheit 103 ein Sensor zum automatischen Erfassen von Parametern. In der dargestellten Ausführungsform sind die Parameter Umgebungsparameter, wobei die Umgebungsparameter die Helligkeit oder Farbtemperatur des Umgebungslichts sein können. Weiterhin kann die Erfassungseinheit 103 eine Schnittstelle oder eine Nutzereingabeeinheit darstellen (nicht dargestellt). Anstelle von Umgebungsparametern können auch die Position des Nutzers oder externe Informationen, wie die Tageszeit oder das Wetter als Parameter aufgefasst werden. In der dargestellten Ausführungsform ist die Erfassungseinheit 103 extern zur Beleuchtungseinheit angeordnet. Alternativ kann die Erfassungseinheit 103 aber auch in der Beleuchtungseinheit 100 integriert sein (nicht dargestellt).

Weiterhin umfasst die Beleuchtungseinheit 100 eine Änderungseinheit 102, wobei in der dargestellten Ausführungsform die Änderungseinheit 102 eine Steuerung bzw. Steuereinheit ist.

Der Sensor 103 übermittelt die erfassten Parameter oder Daten an eine Änderungseinheit 102 auf Grundlage derer die Änderungseinheit eine Änderung in der Lichteinstellung steuert. Die Lichteinstellung bestimmt die Art und Weise der Ausgabe des Lichtes einer Lichtquelle 101. In der vorliegenden Ausführungsform ist die Lichteinstellung die Farbtemperatur des Lichtes. Die Farbtemperatur kann dabei kaltes Licht in bläulichen Farbtönen oder warmes Licht in rötlichen Farbtönen darstellen.

Die Übermittlung der Parameter oder Daten von der Erfassungseinheit 103 an die Änderungseinheit 102 erfolgt erfindungsgemäß beispielsweise über eine drahtlose Kommunikation, beispielsweise über WLAN.

Die Funktionsweise des Küchengerätes 1, die eine Beleuchtungseinheit 100 zur spezifischen Änderung der Beleuchtung eines Küchengerätes 1 in Abhängigkeit von den Nutzerbedürfnissen oder den Umgebungsbedingungen umfasst, soll im Folgenden anhand der Figuren erneut erläutert werden.

Die Erfassungseinheit 103 an einem Küchengerät 1 erfasst automatisch Parameter. Parameter können beispielsweise Umgebungsparameter, wie die Helligkeit oder die Farbtemperatur des Umgebungslichtes in einem Raum sein. Die an der Erfassungseinheit 103 erfassten Parameter oder Daten, werden beispielsweise drahtlos an eine Änderungseinheit 102 übermittelt. Auf Grund der erfassten Parameter steuert die Änderungseinheit 103 die Änderung zumindest einer Lichteinstellung, beispielsweise der Lichtintensität. Die Änderung der Lichteinstellung bewirkt eine Änderung in der Ausgabe des Lichtes zumindest einer Lichtquelle 101 zumindest einer Beleuchtungseinheit 100. Erfindungsgemäß kann die zumindest eine Lichtquelle 101 beispielsweise direkt angesteuert werden. Insbesondere, wenn die zumindest eine Beleuchtungseinheit 100 zwei Lichtquellen 101 umfasst, können diese unterschiedlich voneinander angesteuert werden. Beispielweise kann auf Grund der Änderung der Lichteinstellung durch die Änderungseinheit 102 die Lichtintensität auf die Lichtquellen 101 unterschiedlich verteilt werden. Somit weist beispielweise eine Lichtquelle 101 eine Lichtintensität von 100% auf und die andere Lichtquelle 101 eine Lichtintensität von 0%. Eine Mischung der Lichtintensität zwischen den Lichtquellen (101) ist auch möglich. Weiterhin ist anstatt der automatischen Erfassung von Parametern, die manuelle Erfassung von Parametern möglich, wenn die Erfassungseinheit 103 als eine Nutzereingabeeinheit ausgestaltet ist. In diesem Fall kann der Nutzer selbst die Änderung der Lichteinstellung einer Beleuchtungseinheit 100 an einem Küchengerät 1, entsprechend seiner Bedürfnisse, steuern. Der Nutzer kann in die Nutzereingabeeinheit 103 Parameter eingeben, die an die Änderungseinheit 102 übermittelt werden, woraufhin die Änderungseinheit 102 zumindest eine Lichteinstellung entsprechend ändert. Somit kann die Beleuchtung eines Küchengerätes 1 spezifisch an die Bedürfnisse eines Nutzers oder an die Umgebungsbedingungen angepasst werden.

Mit der vorliegenden Erfindung lässt sich weiterhin eine Reihe von Vorteilen erzielen.

Der einstellbare und automatisch geregelte Fokus der Leuchtkegel bietet eine erhöhte Nutzerfunktionalität, im Sinne der Hunting Field Performance.
Die automatische Regelung der Gesamtbeleuchtung des Küchengerätes anhand der Umgebungshelligkeit oder der Position des Kunden kann weiterhin, im Sinne der Hunting Field Resource efficiency, Energie gespart werden.

Ein weiterer Vorteil, im Sinne der Hunting Field Emotionalization, kann dadurch erzielt werden, das auf Grund der unterschiedlichen Optiken die einzelnen Lichtquellen unterschiedliche gesteuert werden können und somit ein beeindruckendes Leuchtbild für den Nutzer entsteht, wenn beispielweise eine Lichtquelle mit einer Weitwinkel Optik antiproportional zu einer Lichtquelle mit einer Fokussierenden Optik gesteuert wird.

### Bezugszeichenliste

- 1: Küchengerät
- 10: Sichthaube
- 100: Beleuchtungseinheit
- 101: Lichtquelle
- 1010: Lichtkegel
- 1011: weite Lichtkegel
- 1012: schmale Lichtkegel
- 102: Änderungseinheit
- 103: Erfassungseinheit
- 104: Optik
- 1041: Weitwinkel-Optik
- 1042: fokussierende Optik
- 11: Kamin
- 2: Kochfeld

## Patentansprüche

1. Küchengerät (1), das zumindest eine Beleuchtungseinheit (100) mit mindestens einer Lichtquelle (101) aufweist, wobei das Küchengerät eine Dunstabzugshaube ist, das Küchengerät (1) eine Erfassungseinheit (103) zum Erfassen von Parametern umfasst und die zumindest eine Beleuchtungseinheit (100) eine Änderungseinheit (103), die mittels der erfassten Parameter eine Änderung zumindest einer Lichteinstellung steuert, umfasst, **dadurch gekennzeichnet, dass** die zumindest eine Beleuchtungseinheit (100) zumindest zwei unterschiedliche Optiken (104) mit unterschiedlichem Richtungswinkel und/oder Öffnungswinkel umfasst und die Parameter die Position des Nutzers umfassen.

2. Küchengerät (1), gemäß Anspruch 1, **dadurch gekennzeichnet, dass** die Beleuchtungseinheit (100) zumindest zwei Lichtquellen (101) umfasst, wobei die Lichtquellen (101) unabhängig voneinander steuerbar sind.

3. Küchengerät (1), gemäß Anspruch 1 oder 2, **dadurch gekennzeichnet, dass** die zumindest eine Lichtquelle (101) direkt oder über ein Bus-System ansteuerbar ist.

4. Küchengerät (1), gemäß Anspruch 1 bis 3, **dadurch gekennzeichnet, dass** die Erfassungseinheit (103) in die Beleuchtungseinheit (100) integriert oder extern angeordnet ist.

5. Küchengerät (1), gemäß einem der vorstehenden Ansprüche, **dadurch gekennzeichnet, dass** die Erfassungseinheit (103) ein Sensor, eine Nutzereingabeeinheit oder eine Schnittstelle zum Empfang von externen Informationen ist.

6. Küchengerät (1), gemäß einem der vorstehenden Ansprüche, **dadurch gekennzeichnet, dass** die Parameter Umgebungsparameter sind.

7. Küchengerät (1), gemäß Anspruch 6, **dadurch gekennzeichnet, dass** die Umgebungsparameter die Helligkeit des Umgebungslichts umfassen.

8. Küchengerät (1), gemäß einem der vorstehenden Ansprüche, **dadurch gekennzeichnet, dass** die Lichteinstellung die Farbtemperatur umfasst, die Lichtintensität, Richtung der Lichtausgabe, den Ausleuchtungsbereich und/oder die Dauer der Lichtausgabe umfasst.

9. Küchengerät (1), gemäß einem der vorstehenden Ansprüche, **dadurch gekennzeichnet, dass** die Beleuchtungseinheit (100) eine Speichereinheit, insbesondere eine Speichereinheit für individuelle Nutzerprofile mit unterschiedlichen Lichteinstellungen, umfasst.

10. Küchengerät (1), gemäß einem der vorstehenden Ansprüche, **dadurch gekennzeichnet, dass** die Erfassungseinheit (103) eine Kamera umfasst.

11. Küchengerät (1), gemäß einem der vorstehenden Ansprüche, **dadurch gekennzeichnet, dass** die Parameter einen Betriebszustand des Küchengerätes (1) oder eines weiteren Küchengerätes (1) umfassen.

12. Küchengerät (1), gemäß einem der vorstehenden Ansprüche, **dadurch gekennzeichnet, dass** die Parameter die Farbtemperatur des Umgebungslichts umfassen.

13. Verfahren zur Betätigung mindestens einer Beleuchtungseinheit (100) eines Küchengerätes (1), die mindestens eine Lichtquelle (101) aufweist, **dadurch gekennzeichnet, dass** das Küchengerät eine Dunstabzugshaube ist und Parameter an einer Erfassungseinheit (103) der Beleuchtungseinheit (100) erfasst werden, die die Position des Nutzers umfassen, und dass mittels der erfassten Parameter eine Änderung zumindest einer Lichteinstellung durch eine Änderungseinheit (102) der Beleuchtungseinheit (100), die zumindest zwei unterschiedliche Optiken (104) mit unterschiedlichem Richtungswinkel und/oder Öffnungswinkel umfasst, gesteuert wird.

14. Verfahren nach Anspruch 13, **dadurch gekennzeichnet, dass** die Erfassungseinheit (103) die Parameter automatisch erfasst und/oder das der Nutzer die Parameter in der Erfassungseinheit (103) einstellt.

15. Verfahren nach einem der Ansprüche 13 oder 14, **dadurch gekennzeichnet, dass** zumindest eine Beleuchtungseinheit (100) zumindest zwei unterschiedliche Optiken (104) umfasst und wahlweise eine Lichtquelle (101) der Beleuchtungseinheit (100), die einer Optik (104) zugeordnet ist, aktiviert wird oder eine Optik (104) der Lichtquelle (101) zugeordnet wird.

## Claims

1. Kitchen appliance (1), which has at least one lighting unit (100) with at least one light source (101), wherein the kitchen appliance (1) is an extractor hood, the kitchen appliance (1) comprises a detection unit (103) for detecting parameters and the at least one lighting unit (100) comprises a change unit (103) which controls a change of at least one light setting by means of the detected parameters, **characterised in that** the at least one lighting unit (100) comprises at least two different optical systems (104) with different directional angles and/or opening angles and the parameters include the position of the user.

2. Kitchen appliance (1) according to claim 1, **characterised in that** the lighting unit (100) comprises at least two light sources (101), wherein the light sources (101) can be controlled independently of one another.

3. Kitchen appliance (1) according to claim 1 or 2, **characterised in that** the at least one light source (101) can be controlled directly or via a bus system.

4. Kitchen appliance (1) according to claims 1 to 3, **characterised in that** the detection unit (103) is integrated into the lighting unit (100) or is arranged externally.

5. Kitchen appliance (1) according to one of the preceding claims, **characterised in that** the detection unit (103) is a sensor, a user input unit or an interface for receiving external information.

6. Kitchen appliance (1) according to one of the preceding claims, **characterised in that** the parameters are ambient parameters.

7. Kitchen appliance (1) according to claim 6, **characterised in that** the ambient parameters include the brightness of the ambient light.

8. Kitchen appliance (1) according to one of the preceding claims, **characterised in that** the light setting comprises the colour temperature, the light intensity, the direction of the light output, the illumination area and/or the duration of the light output.

9. Kitchen appliance (1) according to one of the preceding claims, **characterised in that** the lighting unit (100) comprises a storage unit, in particular a storage unit for individual user profiles with different light settings.

10. Kitchen appliance (1) according to one of the preceding claims, **characterised in that** the detection unit (103) comprises a camera.

11. Kitchen appliance (1) according to one of the preceding claims, **characterised in that** the parameters include an operating state of the kitchen appliance (1) or of a further kitchen appliance (1).

12. Kitchen appliance (1) according to one of the preceding claims, **characterised in that** the parameters include the colour temperature of the ambient light.

13. Method for actuating at least one lighting unit (100) of a kitchen appliance (1) which has at least one light source (101), **characterised in that** the kitchen appliance is an extractor hood, and parameters, which include the position of the user, are detected at a detection unit (103) of the lighting unit (100), and that by means of the detected parameters a change of at least one light setting is controlled by a change unit (102) of the lighting unit (100), which comprises at least two different optical systems (104) with different directional angles and/or opening angles.

14. Method according to claim 13, **characterised in that** the detection unit (103) automatically detects the parameters and/or that the user sets the parameters in the detection unit (103).

15. Method according to one of claims 13 or 14, **characterised in that** at least one lighting unit (100) comprises at least two different optical systems (104), and optionally a light source (101) of the lighting unit (100) which is associated with an optical system (104) is activated or an optical system (104) is associated with the light source (101).

## Revendications

1. Appareil de cuisine (1) qui comprend au moins une unité d'éclairage (100) avec au moins une source lumineuse (101), dans lequel l'appareil de cuisine est une hotte aspirante, dans lequel l'appareil de cuisine (1) comprend une unité de saisie (103) destinée à saisir des paramètres, et dans lequel l'au moins une unité d'éclairage (100) comprend une unité de modification (103), laquelle commande une modification d'au moins un réglage de lumière au moyen des paramètres saisis, **caractérisé en ce que** l'au moins une unité d'éclairage (100) comprend au moins deux dispositifs optiques différents (104) ayant différents angles de direction et/ou angles d'ouverture, et **en ce que** les paramètres comprennent la position de l'utilisateur.

2. Appareil de cuisine (1) selon la revendication 1, **caractérisé en ce que** l'unité d'éclairage (100) comprend au moins deux sources lumineuses (101), les sources lumineuses (101) pouvant être commandées indépendamment les unes des autres.

3. Appareil de cuisine (1) selon la revendication 1 ou 2, **caractérisé en ce que** l'au moins une source lumineuse (101) peut être commandée directement ou par un système de bus.

4. Appareil de cuisine (1) selon les revendications 1 à 3, **caractérisé en ce que** l'unité de saisie (103) est disposée de manière intégrée dans l'unité d'éclairage (100) ou de manière externe.

5. Appareil de cuisine (1) selon l'une quelconque des revendications précédentes, **caractérisé en ce que** l'unité de saisie (103) est un capteur, une unité d'entrée par un utilisateur ou une interface destinée à recevoir des informations externes.

6. Appareil de cuisine (1) selon l'une quelconque des revendications précédentes, **caractérisé en ce que** les paramètres sont des paramètres environnementaux.

7. Appareil de cuisine (1) selon la revendication 6, **caractérisé en ce que** les paramètres environnementaux comprennent la luminosité de la lumière ambiante.

8. Appareil de cuisine (1) selon l'une quelconque des revendications précédentes, **caractérisé en ce que** le réglage de lumière comprend la température de couleur, l'intensité lumineuse, la direction de l'émission de lumière, la zone d'éclairage et/ou la durée de l'émission de lumière.

9. Appareil de cuisine (1) selon l'une quelconque des revendications précédentes, **caractérisé en ce que** l'unité d'éclairage (100) comprend une unité de mémorisation, notamment une unité de mémorisation pour profils utilisateur individuels avec différents réglages de lumière.

10. Appareil de cuisine (1) selon l'une quelconque des revendications précédentes, **caractérisé en ce que** l'unité de saisie (103) comprend une caméra.

11. Appareil de cuisine (1) selon l'une quelconque des revendications précédentes, **caractérisé en ce que** les paramètres comprennent un état de fonctionnement de l'appareil de cuisine (1) ou d'un appareil de cuisine supplémentaire (1).

12. Appareil de cuisine (1) selon l'une quelconque des revendications précédentes, **caractérisé en ce que** les paramètres comprennent la température de couleur de la lumière ambiante.

13. Procédé d'actionnement au moins d'une unité d'éclairage (100) d'un appareil de cuisine (1), laquelle comprend au moins une source lumineuse (101), **caractérisé en ce que** l'appareil de cuisine est une hotte aspirante, et **en ce que** des paramètres sont saisis sur une unité de saisie (103) de l'unité d'éclairage (100), lesquels comprennent la position de l'utilisateur, et **en ce qu'**au moyen des paramètres saisis, une modification au moins d'un réglage de lumière est commandée par une unité de modification (102) de l'unité d'éclairage (100), laquelle comprend au moins deux dispositifs optiques différents (104) ayant différents angles de direction et/ou angles d'ouverture.

14. Procédé selon la revendication 13, **caractérisé en ce que** l'unité de saisie (103) saisit les paramètres automatiquement et/ou **en ce que** l'utilisateur règle les paramètres dans l'unité de saisie (103).

15. Procédé selon l'une quelconque des revendications 13 ou 14, **caractérisé en ce qu'**au moins une unité d'éclairage (100) comprend au moins deux dispositifs optiques différents (104) et **en ce que**, sélectivement, une source lumineuse (101) de l'unité d'éclairage (100), laquelle est associée à un dispositif optique (104), est activée, ou un système optique (104) est associé à la source lumineuse (101).
